# DEMANDE DE BREVET EUROPEEN

(11) **EP 0 582 555 A1**
(43) Date de publication de la demande: **09.02.1994**
(21) Numéro de dépôt: 93830322.9
(22) Date de dépôt: 23.07.1993
(51) Int. Cl.: F01C 21/10, F02B 53/00

(54) **Moteur rotatif**

(30) Priorité: 05.08.1992 IT FI920165
(71) Demandeur: Alessandri, Alessandro, I-50010 Fiesole (Florence) (IT)
(72) Inventeur: Alessandri, Alessandro, I-50010 Fiesole (Florence) (IT)
(74) Mandataire: Martini, Lazzaro

(57) **Abrégé**

Moteur rotatif comprenant un stator (10) cylindrique ayant une section elliptique et un organe rotorique (1) coaxial audit stator (10), lequel délimite deux cavités (80) identiques et diamétralement opposées; et comprenant plusieurs secteurs (2) oscillants par rapport au rotor (1) de manière à definir des chambres (50) correspondantes à géométrie variable pour chaque tour du rotor et de manière que les chambres (50) délimitées par les secteurs diamétralement opposés soient identiques, mais en opposition par rapport au sens de rotation.

## Description

La présente invention concerne un moteur avec mouvement rotatif.

Il est connu que, dans les moteurs alternatifs traditionnels à combustion interne, une bonne partie de la puissance fournie est dissipée pour vaincre les résistances passives des organes de distribution et pour les frottements qui sont engendrés entre les pièces en mouvement relatif, comme par exemple celui dérivant de la poussée exercée en direction radiale par les pistons sur les parois des cylindres. La diminution du rendement de la machine qui en découle peut atteindre 50% de la valeur théorique, c'est-à-dire pouvant être obtenue de manière idéale en absence de frottements et de résistances passives. Du point de vue fonctionnel, ceci se traduit par le fait que, par exemple, vis-à-vis d'un rendement idéal égal à environ 0,65, le rendement effectif de la machine est égal à environ 0,30-0,35.

Il est également connu que, dans ces moteurs alternatifs connus, le cycle thermodynamique réel accomplit pendant un tour de l'arbre moteur ne permet pas la combustion complète du mélange air-combustible, de sorte que le rendement thermique s'avère extrêmement bas et qu'il se manifeste la production et l'émission de gaz imbrûlés hautement nuisibles, comme par exemple le monoxyde de carbone.

Il est également connu que, dans lesdits moteurs alternatifs connus, la disposition des pistons sur les mécanismes à manivelle qui transmettent le mouvement à l'arbre moteur entraîne le développement de forces de déséquilibrage présentant un module et un sens variables au cours du mouvement des pistons, et dépendant étroitement de la vitesse de rotation de l'arbre, ces forces engendrant de fortes vibrations sur le banc de support du moteur et, par conséquent, au châssis du véhicule. Une conséquence de ce fait est constituée par le grave danger de rupture par fatigue des parties métalliques de la structure, aussi bien du banc que du châssis, et la réduction du confort de conduite. Tout ceci impose la nécessité d'employer des systèmes appropriés pour équilibrer correctement les masses tournantes, comme par exemple l'arbre manivelle, et pour amortir les vibrations résiduelles et également pour renforcer le châssis: mais tout cela entraîne l'augmentation du poids total du véhicule et, par conséquent, de la consommation spécifique du moteur, avec l'inconvénient d'alourdir les coûts de fabrication et d'exercice.

On connaît également des moteurs à combustion interne à carburation rotatifs, comme par exemple du type Wankel, lesquels comprennent un stator cylindrique de section épitroncoïde, dans lequel tourne de manière excentrique un corps prismatique avec les côtés convexes, dont les sommets, en s'appuyant sur les parois du stator, définissent des zones de compression et de détente destinées à faire accomplir au mélange d'alimentation un cycle Huit normal.
Mais, en relation avec l'excentricité du rotor par rapport à l'arbre moteur, même dans ces moteurs rotatifs connus, pendant le fonctionnement, des forces centrifuges de valeur considérable sont engendrées et celles-ci donnent lieu à de fortes vibrations et, par conséquent, provoquent une rapide détérioration des joints d'étanchéité des gaz et des fluides de service, la fatigue précoce des structures métalliques portantes et la forte réduction du confort de conduite.

En outre d'après le brevet FR 81/05028 est connu une machine à piston rotatif. Ladite machine comprend un stator à profil interne sensiblement ovale dans lequel peut tourner un rotor coaxiale au stator et muni de pales qui peuvent coulisser dans le sens radial, l'ensemble étant tel que des chambres de volume variable soient déterminées entre le rotor, le stator et les pales au cours d'une rotation relative entre le rotor et le stator, les susdites pales étant munies, à leur extrémité radiale extérieure, de segments frottant contre la surface interne du stator, ces pales étant reliées à leur autre extrémité, voisine de l'axe du rotor, par des biellettes articulées formant un polygone déformable, nottamment un losange déformable pour un nombre de pales égal à quatre, des galets pouvant être montés aux sommets de ce polygone de manière à s'appuyer contre une came de guidage, l'ensemble étant tel que l'extrémité extérieure des pales, lors de la rotation du rotor, décrit une courbe parallèle au profil interne du stator et située à proximité de ce profil, le stator étant fermé par deux flasques latéraux entre lequels est situé le rotor. La came est disposée à l'intérieur du rotor.
Mais cette connue machine réquit une came de guidage dudit polygone.

Le but principal de la présente invention est d'éliminer les inconvénients précités et de réaliser un moteur rotatif qui permette d'éliminer l'excentricité entre le rotor et le stator.
Ce résultat a été atteint, conformément à l'invention, en adoptant l'idée de réaliser un moteur comprenant un stator cylindrique de section transversale elliptique et un organe rotorique coaxial au stator, lequel délimite deux cavités identiques et diamétralement opposées et comprend plusieurs secteurs oscillants par rapport au rotor de manière à définir plusieurs chambres à géométrie variable et de manière que les chambres délimitées par les secteurs diamétralement opposés soient identiques, mais en opposition par rapport au sens de rotation.

Les avantages obtenus grâce à la présente invention consistent essentiellement en ce qu'il est possible d'éliminer le frottement dérivant du mouvement des pistons dans les cylindres correspondants et les résistances passives des organes de distribution, en réalisant un rendement effectif égal à environ 0,60; qu'il est possible d'éliminer les vibrations transmises par les masses qui tournent de manière excentrique à grande vitesse, et par conséquent de prolonger la durée de vie des moyens d'étanchéité des gaz brûlés et des fluides de service et la durée de vie des structures métalliques portantes; qu'il est possible d'utiliser de manière efficace différents types de carburant, comme par exemple l'essence, le diesel, le G.P.L., le méthane et les alcools; qu'il est possible de prolonger la phase de combustion du mélange air-combustible, et par conséquent d'augmenter le rendement thermique du moteur et de réduire la quantité de gaz nuisibles émis et la consommation spécifique; qu'un moteur selon l'invention présente des dimensions réduites, en relation avec la puissance engendrée; qu'il est de fabrication simple, économique et fiable même après une longue période de fonctionnement.

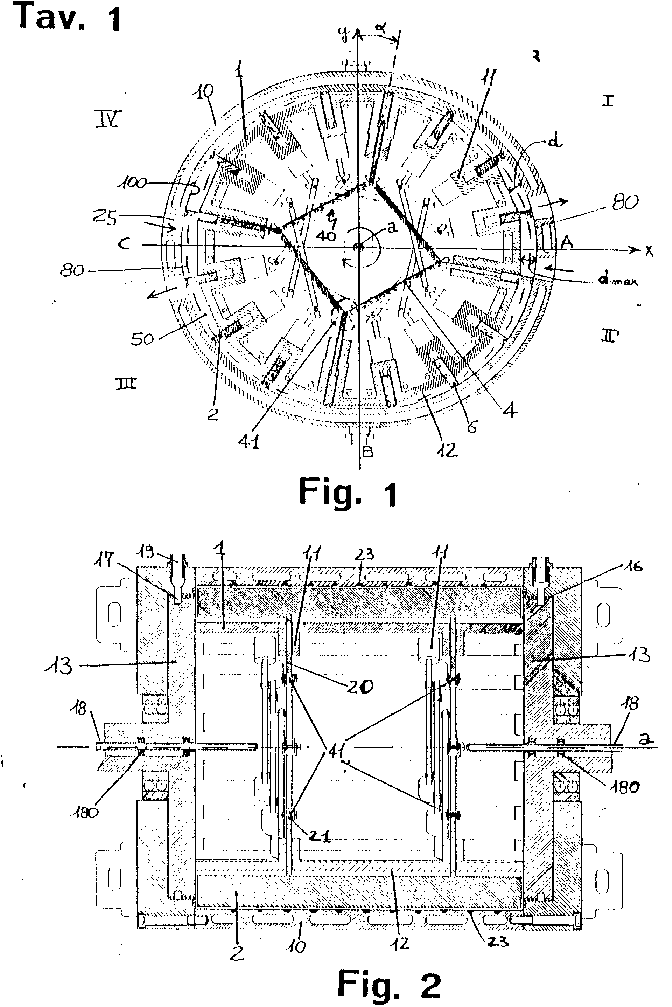

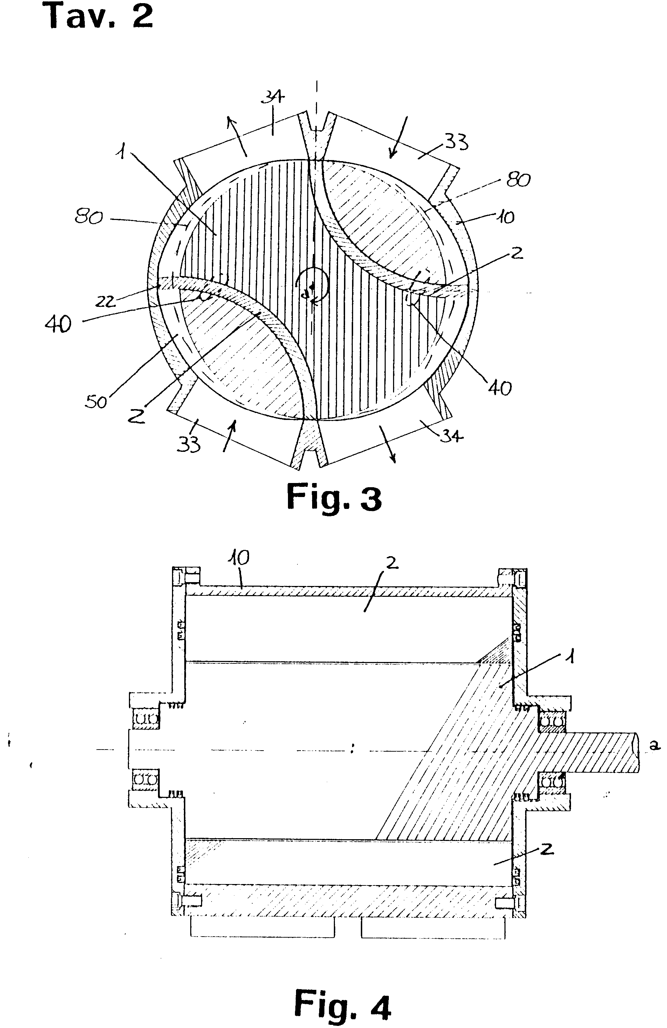

Ces avantages et caractéristiques de l'invention ainsi que d'autres seront plus et mieux compris de chaque homme du métier à la lumière de la description qui va suivre et à l'aide des dessins annexés donnés à titre d'exemplification pratique de l'invention, mais à ne pas considérer dans le sens limitatif; dessins sur lesquels la Fig. 1 représente une vue en coupe transversale partielle d'un moteur conformément à l'invention, selon une première forme de réalisation; la Fig. 2 représente la vue en coupe longitudinale partielle du moteur de la Fig. 1; la Fig. 3 représente une vue en coupe transversale partielle d'un moteur conformément à l'invention, selon une forme de réalisation alternative; la Fig. 4 représente la vue en coupe longitudinale partielle du moteur de la Fig. 3; la Fig. 1 représente une vue en coupe transversale détaillée du rotor pour le moteur de la Fig. 3.

Réduit à sa structure essentielle et en référence aux figures des dessins annexés, un moteur rotatif, conformément à l'invention, comprend un stator (10) cylindrique de section transversale elliptique et un organe rotorique (1) coaxial audit stator (10), lequel délimite deux cavités (80) identiques, diamétralement opposées et comprend plusieurs secteurs (2) oscillants par rapport au rotor (1) de manière à définir plusieurs chambres (50) correspondantes à géométrie variable pour chaque tour du rotor et de manière que les chambres (50) délimitées par les secteurs (2) diamétralement opposés soient identiques, mais en opposition par rapport au sens de rotation.

Selon une première forme de réalisation et en référence aux Fig. 1 et 2 des dessins annexés, ledit rotor (1) est constitué par un corps prismatique creux qui loge à l'intérieur une pluralité de paires de parallélogrammes (40) desmodromiques juxtaposés et coaxiaux au rotor (1), chacun desquels est constitué par quatre tiges (4) identiques et articulées l'une à l'autre en correspondance des extrémité respectives, dans lequel les parallélogrammes (40) de chaque paire ont les côtés homologues parallèles et dans lequel aux deux sommets (41) homologues des parallélogrammes de chaque paire sont respectivement articulées les pieds (21) de deux queues (20) parallèles d'un secteur correspondant (2) ayant un profil rectangulaire, de manière que les secteurs (2) associés à une même paire de parallélogrammes (40) parallèles soient mutuellement orthogonaux: lesdites queues (20) étant logées coulissantes dans des guides radiaux correspondants (11) du rotor (1).
Du fait que, pendant le mouvement du rotor (1), les secteurs (2) effectuent une translation suivant la direction des guides (11) respectifs, pour permettre le contact continu des têtes (22) des secteurs (2) sur la surface interne (100) du stator (10), il est prévu, conformément à l'invention, que la distance "d" entre ladite surface (100) et la surface externe (12) du rotor (1) soit variable linéairement en fonction de la position angulaire du rotor (1) le long des quatre arcs de cercle égaux de 90° parcourus en un tour.

Plus précisément, en référence à une paire d'axes orthogonaux (x,y) ayant leur origine commune sur l'axe "a" de rotation du rotor (1) et orientés de manière à être l'un horizontal et l'autre vertical, et en mesurant les angles positivement dans le sens des aiguilles d'une montre à partir de l'axe vertical de la référence ainsi définie, ladite distance "d" varie suivant la loi d=k*α, où "α" est la mesure de la position angulaire du rotor (1) et "k" est une constante qui prend un signe positif dans le premier et le troisième quadrant, alors qu'elle prend un signe négatif dans le deuxième et le quatrième quadrant, et qui est définie, en valeur absolue, par le rapport dmax/90, c'est-à-dire entre la distance maximum désirée entre la surface statorique interne (100) et la surface rotorique externe (12) et le nombre 90.
Ainsi, par exemple, si la distance maximale désirée entre lesdites surfaces (100) et (12) est de 18 mm, la valeur absolue de la constante "k" est égale à 18 / 90 = 0,2 mm, et par conséquent la distance "d", au cours d'un tour complet du rotor, varie selon le schéma suivant:

| **QUADRANT** | **BORNES DU QUADRANT** | **VALEUR DE "d"** |
|---|---|---|
| I | 0° - 90° | + 0,2 |
| II | 90° - 180° | - 0,2 |
| III | 180° - 270° | + 0,2 |
| IV | 270° - 360° | - 0,2 |

Avantageusement, lesdits secteurs (2) sont munis dans leur partie supérieure d'une rainure longitudinale (6) pour permettre l'étanchéité des chambres de travail (50).
En outre, les queues (20) desdits secteurs (2) sont munies de joints d'étanchéité, non représentés par simplification, pour la meilleure étanchéité de l'huile lubrifiante.
De plus, il est avantageusement prévu que lesdits secteurs (2) soient munis dans leur partie supérieure de segments élastiques longitudinaux, non représentés par simplification, pour l'étanchéité du contact avec la surface interne (100) du stator (10).
Deux flasques (13) latérales, opposées sont prévues solidaires du rotor (1) et munies de plusieurs bandes élastiques circulaire (16), pour permettre la fermeture latérale hermétique des chambres (50) de compression et de détente.

Avantageusement, lesdites flasques (13) sont munies de canaux internes (17) communiquant avec des conduits correspondants (19) pour l'aspiration de l'huile de lubrification et de refroidissement, laquelle est injectée à l'intérieur du rotor (1), en correspondance des sommets (41) des parallélogrammes (40) au moyen de deux petits tubes (18) montés fous et coaxiaux à l'intérieur de l'arbre moteur (30) au moyen de coussinets correspondants (180).

Confomément à l'invention, le stator (10) est muni de deux lumières (25) d'alimentation du carburant, lesquelles sont diamétralement opposées et disposées en correspondance des extrémités du grand demi-axe de ladite surface statorique (100), c'est-à-dire à proximité des zones dans lesquelles la distance entre la surface rotorique externe (12) et la surface statorique interne (100) est maximale.
En alternative, conformément à l'invention, l'alimentation du carburant est réalisée au moyen d'une turbine, non représentée par simplification dans les dessins annexés, laquelle est actionnée par les gaz d'échappement.
Selon une autre forme alternative de réalisation de la présente invention, l'alimentation du carburant est réalisée au moyen de plusieurs injecteurs continus, non représentés par simplification.
Avantageusement, conformément à l'invention, plusieurs bougies à allumage continu, non représentées dans les dessins annexés, sont prévues pour le démarrage du moteur.
Conformément à l'invention, ladite surface interne (100) du stator (10) est munie d'une pluralité de gorges circonférentielles (23), pour permettre d'alimenter et de loger plusieurs flammes pilotes correspondantes destinées à amorcer la combustion continue dans les chambres (50) qui, en phase de combustion maximale, se succèdent au fur et à mesure pendant la rotation.
De cette manière, il n'est pas nécessaire d'utiliser des bougies pour le fonctionnement du moteur et il est possible d'utiliser également un mélange air-gas-oil très dilué, sans avoir nécessairement à réaliser un rapport de compression très élevé.

Il va de soi que le nombre de secteurs (2), tout comme le diamètre et la longueur du rotor (1) et du stator (10) sont variables en fonction de la cylindrée du moteur désirée.

Le fonctionnement du moteur, conformément à l'exemplification pratique décrite, est le suivant. A partir de la position repérée par la lettre A sur la Fig. 1 et en supposant que la rotation s'effectue dans le sens des aiguilles d'une montre, sur les premiers 30°, c'est-à-dire en correspondance du secteur angulaire dans lequel la distance entre la surface rotorique externe (12) et la surface statorique interne (100) est maximale, il se produit l'aspiration du carburant dans la chambre correspondante (50) à travers la lumière (25).
Durant la rotation successive de 60° (arc A-B), on obtient la compression du mélange et, au terme de cette phase, l'explosion. Les gaz ainsi produits exercent une poussée sur la surface latérale des secteurs (2) qui délimitent la chambre d'explosion, en provoquant la rotation du rotor (1). Au cours des 90° suivants (arc B-C), on obtient la détente et l'échappement des gaz brûlés. Le cycle décrit ci-dessus se répète au cours de la rotation successive de 180° qui fait terminer un tour au rotor (1), de sorte que, en un tour, on effectue deux cycles thermodynamiques complets d'admission - compression - explosion - détente - échappement pour chacune des chambres (50) comprises entre deux secteurs (2) adjacents. Et, du fait que les quatre secteurs (2) qui correspondent à chaque parallélogrammes (40) sont mutuellement orthogonaux, la résultante correspondante des forces centrifuges qui sont engendrées pendant la rotation s'annule, et donc aucune action dynamique de caractère déséquilibrant susceptible de provoquer l'apparition de vibrations n'intervient. En outre, la force centrifuge qui agit sur les éléments élastiques longitudinaux (11) provoque leur dilatation et ainsi le contact continu avec la surface interne (100) du stator (10), en assurant l'étanchéité parfaite des chambres (50).

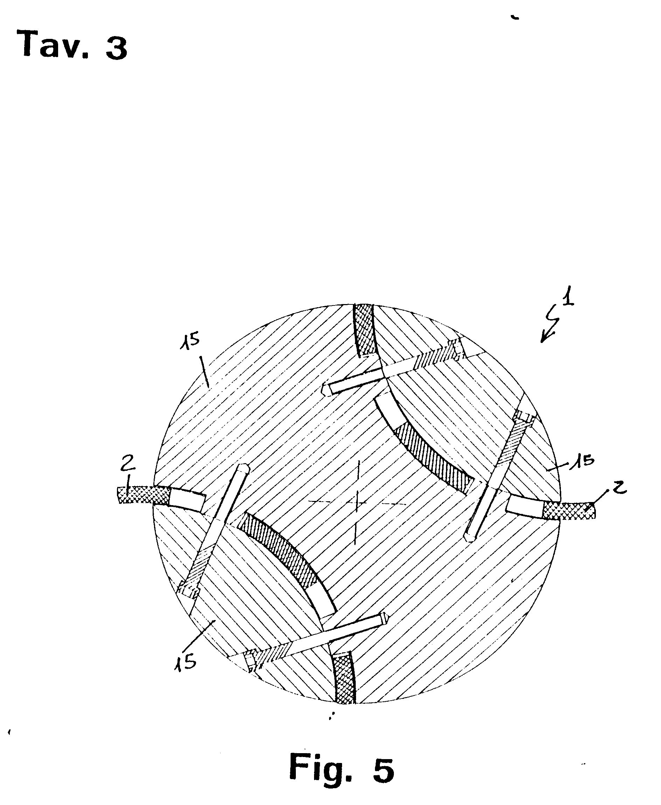

Selon une forme alternative de réalisation et en référence aux Fig. 3, 4 et 5 des dessins annexés, ledit rotor (1) est cylindrique, de section circulaire et il est réalisé en trois éléments (15) assemblables, pour permettre le montage de deux secteurs correspondants (2) oscillants courbes avec les têtes respectives (22) en contact avec la paroi (100) interne du stator, et avec les concavités respectives orientées vers l'extérieur, de manière à définir quatre chambres correspondantes (50) de compression et, respectivement, de détente: le stator (10) étant muni de deux lumières d'aspiration (33) diamétralement opposées et de deux lumières d'échappement (34) elles aussi diamétralement opposées, lesquelles lumières (33,34) sont disposées à proximité des extrémités du petit demi-axe du stator (10).

En référence à cette deuxième forme de réalisation, en prenant comme hypothèse que le fluide de travail est de l'air à comprimer et comme autre hypothèse que le rotor (1) est actionné par un organe moteur correspondant, dans la condition de fonctionnement au régime, dans le premier quadrant on obtient l'aspiration de l'air dans la chambre correspondante (50) et, dans le deuxième quadrant, la compression correspondante. Le cycle se poursuit de manière analogue dans le troisième et, respectivement, dans le quatrième quadrant, de sorte que lors d'un tour complet du rotor, on effectue deux cycles complets d'admission - compression - refoulement dans chaque chambre de travail (50).

Il va de soi que, en invertissant le flux du fluide opérateur, la machine fonctionne comme un moteur à fluide.

## Revendications

**1)** Moteur rotatif comprenant un stator (10) cylindrique ayant une section elliptique et un organe rotorique (1) coaxial audit stator (10), lequel délimite deux cavités (80) identiques et diamétralement opposées, plusieurs secteurs (2) oscillants par rapport au rotor (1) de manière à définir des chambres (50) correspondantes à géométrie variable pour chaque tour du rotor et de manière que les chambres (50) délimitées par les secteurs (2) diamétralement opposés sont identiques, mais en opposition par rapport au sens de rotation, caractérisé en ce que ledit rotor (1) est constitué par un corps qui loge à l'intérieur une pluralité de paire de parallélogramme (40) desmodromiques justaposés et coaxiaux au rotor (1), chacun desquels est constitué par quatre tiges (4) identiques et articulées l'une à l'autre en correspondance des extrémités respectives, dans lequel les parallélogrammes (40) de chaque paire ont les côtés homologues parallèles et dans lequel aux deux sommets (41) homologues des parallélogrammes de chaque paire sont respectivement articulées les pieds (21) de deux queues (20) parallèles d'un secteur correspondant (2) ayant une section longitudinale de forme rectangulaire, de manière que les quatre secteurs (2) associés à une même paire de parallélogramme (40) parallèles soient mutuellement orthogonaux: lesdites queues (20) étant logées coulissantes dans des guides radiaux correspondants (11) du rotor (1).

**2)** Moteur selon la revendication 1, caractérisé en ce que ledit rotor (1) est muni de deux flasques (13) latérales opposées toutes les deux étant munies de plusieurs canaux internes (17) communiquant avec des conduits correspondeants (19) pour l'aspiration de l'huile de lubrification et de refroidissement, laquelle est pulvérisée à l'intérieur du rotor (1), en correspondance des sommets (41) parallélogramme au moyen au moyen de deux petits tubes (18) montés fous et coaxiaux à l'intérieur de l'arbre moteur (30) au moyen de coussinets correspondants (180).

**3)** Moteur selon la revendication 1, caractérisé en ce que le stator (10) est muni de deux lumières (25) d'alimentation du carburant, lesquelles sont diamétralement opposées et disposées en correspondance des extrémités du grand demi-axe de ladite surface statorique (100), c'est-à-dire à proximité des zones dans lesquelles la distance entre la surface rotorique externe (12) et la surface statorique interne (100) est maximale.

**4)** Moteur selon la revendication 1, caractérisé en ce qu'il est alimenté au moyen d'une turbine actionnée par les gaz d'échappement.

**5)** Moteur selon la revendication 1, caractérisé en ce qu'il est alimenté au moyen de plusieurs injecteurs.

**6)** Moteur selon la revendication 1, caractérisé en ce qu'il est équipé de plusieurs bougies à allumage continu, pour son démarrage.

**7)** Moteur selon la revendication 1, caractérisé en ce que ladite surface interne (100) dudit stator (10) est munie d'une pluralité de gorges circonférentielles (23), pour permettre d'alimenter et de loger plusieurs flammes pilotes correspondantes destinées à amorcer la combustion continue dans les chambres (50) qui, en phase de combustion maximale, se succèdent au fur et à mesure pendant la rotation.

**8)** Moteur selon la revendication 1, caractérisé en ce que le nombre de secteurs (2), le diamètre et la longueur du rotor (1) et du stator (10) sont variables en fonction de la cylindrée désirée.

**9)** Moteur rotatif comprenant un stator (10) culyindrique ayant une section elliptique et un organe rotorique (1) coaxiale audit stator (10), lequel délimite deux cavités (80) identiques et diamétralement opposées, caractérisé en ce que ledit rotor (1) est cylindrique, de section circulaire et qu'il est réalisé en trois éléments (15) assemblables, pour permettre le montage de deux secteurs correspondants (2) oscillants courbes avec les têtes respectives (22) en contact avec la paroi (100) interne du stator, et avec les concavités respectives orientées vers l'extérieur, de manière à définir quatre chambres correspondantes (50) de compression et, respectivement, de détente: le stator (10) étant muni de deux lumières d'aspiration (33) diamétralement opposées et de deux lumières d'échappement (34) elles aussi diamétralement opposées, lesquelles lumières (33,34) sont disposées à proximité des extrémités du petit demi-axe du stator (10).

**10)** Moteur selon les revendications 1 et 9, caractérisé en ce que la distance "d" entre la dite surface interne (100) dudit stator (10) et la surface externe (12) dudit rotor (1) est variable linéairement en fonction de la position angulaire du rotor (1) le long de chacun des quatre arcs de cercle égaux de 90° parcourus en un tour, et en ce que ladite distance "d" varie suivant la loi d=k*α, où "α" est la mesure de la position angulaire du rotor (1) et "k" est une constante qui prend un signe positif dans le premier et le troisième quadrant et un signe négatif dans le deuxième et le quatrième quadrant, et cette constante étant définie, en valeur absolue, par le rapport dmax/90, c'est-à-dire entre la distance maximun désirée entre la surface statorique interne (100) et la surface rotorique externe (12), et le nombre 90.
